# EUROPEAN PATENT SPECIFICATION

(11) **EP 4 647 463 B1**
(45) Date of publication and mention of the grant of the patent: **25.11.2026**
(21) Application number: 25202141.5
(22) Date of filing: 13.12.2023
(51) Int. Cl.: B29B 17/00, B09B 3/70, B09B 5/00, B29B 17/02, B29B 17/04, C08J 11/26, B29K 63/00, B29K 105/06

(54) **WIND TURBINE BLADE PROCESSING**
WINDTURBINENSCHAUFELVERARBEITUNG
TRAITEMENT DE PALE D'ÉOLIENNE

(30) Priority: 13.12.2022 DK PA202270600
(43) Date of publication of application: 12.11.2025
(62) Document number(s) of the earlier application(s) in accordance with Art. 76 EPC: 23825391.8 / 4 633 891
(73) Proprietor: VESTAS WIND SYSTEMS A/S, 8200 Aarhus N (DK)
(72) Inventor: Rehmeier, Mie, 8471 Sabro (DK); Nielsen, Troels Bach, 8240 Risskov (DK); Thede, Henrik, 6800 Varde (DK)
(74) Representative: Vestas Patents Department

(56) References cited:
- WO-A1-2021/191296
- CN-A- 114 634 653
- UNKNOWN: "Revolutionary RecyclableBlades: Siemens Gamesa technology goes full-circle at RWE's Kaskasi offshore wind power project", 1 August 2022 (2022-08-01), pages 1 - 3, XP093135489, Retrieved from the Internet <URL:https://web.archive.org/web/20220926030700/https://www.siemensgamesa.com/en-int/explore/journal/recyclable-blade> [retrieved on 20240227]
- SIEMENS GAMESA: "Siemens Gamesa RecyclableBlade", 7 September 2021 (2021-09-07), XP093135625, Retrieved from the Internet <URL:https://www.youtube.com/watch?v=-AVqdYIn_og> [retrieved on 20240228]

## Description

### FIELD OF THE INVENTION

The present invention relates to a method of preparing a wind turbine blade for recycling.

### BACKGROUND OF THE INVENTION

Wind turbine blades are today difficult to recycle efficiently due to the strong binding between material types. Wind turbine blades typically include a variety of materials, such as glass fibre composite, carbon fibre composite, foam core, metallic components - such as lightning protection system parts, sensors and electronics, etc. Many of these different materials are bound together by a resin system infused during blade manufacture. However, the blade may also include a multitude of different binding materials, such as adhesives and other resins used during blade manufacture prior to or subsequent to this infusion step. Mechanical separation of these different material types is particularly difficult to do for wind turbine blades due to their design. WO 2021191296A1 relates to a method for preparing a wind turbine blade for recycling by sectioning the wind turbine into at least a first and a second wind turbine blade part comprising different types of materials or comprising the same type of materials in a different relative content

### SUMMARY OF THE INVENTION

The invention provides a method of preparing a wind turbine blade for recycling, the method comprising: subjecting at least a portion of the wind turbine blade to a first chemical treatment, wherein the first chemical treatment is selected to degrade a first binding material of the wind turbine blade portion to a significantly greater extent than a second binding material of the wind turbine blade portion; and separating a part of the wind turbine blade portion from the remainder of the wind turbine blade portion after the first chemical treatment has sufficiently degraded the first binding material to release the part from the remainder of the wind turbine blade portion and before the first chemical treatment has significantly degraded the second binding material. After the first chemical treatment, subjecting the part of the wind turbine blade portion comprising the second binding material therein to a second treatment to degrade or remove the second binding material. Wherein the second treatment is a second chemical treatment, wherein the second chemical treatment is either i) using different chemistry to the first chemical treatment or ii) is using the same chemistry as used in the first chemical treatment but under different reaction conditions so degradation of the second binding material occurs at different reaction speed to the first chemical treatment.

The invention exploits chemical treatment to separate at least a part of the wind turbine blade and utilises the different binding materials of the wind turbine blade to a positive advantage. Particularly, the invention utilises a finding that a selected chemical treatment can be used to significantly degrade a chosen binding material.

By 'significantly degrade' we mean here that the binding material is degraded to an extent whereby it can no longer perform its binding function adequately, so that the bound parts are separable readily by mechanical action.

The first chemical treatment utilises a particular chemistry under particular reaction conditions and a particular reaction time to significantly degrade the first binding material by interaction with chemical compounds. In that same time and under those same conditions with that same chemical treatment the second binding material is not significantly degraded and so still performs a strong binding function, so that material bound by the second binding material is not separable readily by mechanical action. However, it need not be excluded that the second binding material can be significantly degraded by the same chemistry used in the first chemical treatment under different reaction conditions (such as for example different temperature, pressure, concentration, and/or reaction time or by addition of reaction enhancing additives); nor need it be excluded that the second binding material may degrade slightly under the first chemical treatment.

A binding material is any material used to bind together another material, or materials, or components.

Examples of binding materials may include polymers, either thermoplastic or thermoset, which binding material may be used as e.g. a resin or composite material matrix, an adhesive, ora cover layer, e.g. a coating, a bag, a transition layer or wrap which may form e.g. a barrier layer, and is bound to another material or part.

The separation of the part after the first chemical treatment from the remainder of the wind turbine blade may be by mechanical action. For example, the part may be separated by application of an external force, in particular a relatively low force, much lower than a binding force of the first binding material prior to the first chemical treatment. The external force may be provided by e.g. a lifting force using a tool, gravity, a fluid flow, etc.

The separation may provide a separated part that comprises one or more materials. Where the separated part consists of a single material then that material may be ready for immediate recycling into another product. Where the separated part comprises more than one material then that material may be processed further to a form in which it may be recycled into another product. Yet further, where the separated part comprises more than one materials but those materials are already in a form where they may be recycled into another product then no further processing may be required to achieve the recycling objective. Yet further, the separated part may be deemed un-recyclable but the remainder of the wind turbine blade after the part is separated may comprise recyclable material or materials. The remainder of the wind turbine blade may undergo further processing to achieve a desired material or materials for recycling.

The first chemical treatment may be an acid treatment. The acid treatment may use acetic acid. Alternatively, the first chemical treatment may use an organic solvent.

The first chemical treatment may dissolve the first binding material to solution or separated the first binding material into particulates of a dimension much smaller than the untreated first binding material, leaving the remainder of the wind turbine blade not disintegrated. Alternatively, the first chemical treatment may degrade the first binding material to a soft malleable, fluid or particulate form from which the remainder of the wind turbine blade may be readily mechanically separated.

The first binding material may be a polymer, preferably a thermoset, preferably an epoxy.

The second binding material may be a polymer, preferably a thermoplastic or a thermoset polymer.

The second binding material may be a thermoplastic polymer. Where a thermoplastic polymer is used as the second binding material, the second treatment may be a heat treatment. The heat treatment may be sufficient to soften or melt the second binding material so that it can be removed.

The part separated after the first chemical treatment may be one or more of a glass fibre part, a carbon fibre part, a foam core part or a metallic part.

The method may further comprise recovering one or more materials from the separated part to be recycled into another product. Additionally or alternatively, one or more materials may be recovered from the remainder of the wind turbine blade for recycling or otherwise. For example the first binding material may be recovered after the first chemical treatment in the form of a powder of (semi) degraded polymer or oligomer.

The wind turbine blade portion may comprise a first fibre composite part and a second fibre composite part, wherein the first fibre composite part contains first fibres in a matrix comprising the first binding material, and the second fibre composite part contains second fibres in a matrix comprising the second binding material.

The first fibres may be glass fibres and the second fibres may be carbon fibres, or vice versa, or the first and second fibres may both be glass or may both be carbon.

The second binding material may be a matrix material of the second fibre composite part.

The second binding material may be a cover layer over a matrix material of the second fibre composite part.

The matrix material of the second fibre composite part may be a third binding material.

The method may further comprise a third treatment to degrade or remove the third binding material from the second fibre composite part.

The second fibre composite part may comprise a stack of strips of pultruded carbon fibre composite material, each strip having opposing major surfaces, and wherein the cover layer of the second binding material covers either i) at least the major surfaces of each strip, or ii) a majority of an exterior of the stack of strips.

In one case, the third binding material is the same as the first binding material and the third treatment is the same as the first chemical treatment.

The second binding material may have relatively high blocking effect to the first chemical treatment compared to a blocking effect of the first binding material to the first chemical treatment.

The method may further comprise mechanically segmenting a wind turbine blade to create the wind turbine blade portion, e.g. prior to the first chemical treatment.

### BRIEF DESCRIPTION OF THE DRAWINGS

Embodiments of the invention will now be described with reference to the accompanying drawings, in which:
Figure 1 shows a wind turbine;
Figure 2 shows a wind turbine blade to be segmented into blade potions:
Figure 3 shows a first flow diagram of a process of preparing a wind turbine for recycling;
Figure 4 shows a second flow diagram of a process of preparing a wind turbine for recycling;
Figure 5 shows a third flow diagram of a process for preparing a wind turbine for recycling;
Figure 6 shows a chordwise cross section of a typical wind turbine blade;
Figure 7 shows a detailed view of area B of Figure 6;
Figures 8 to 13 show a process of preparing a wind turbine blade portion for recycling; and
Figures 14 to 16 show a process of preparing a wind turbine blade portion for recycling.

### DETAILED DESCRIPTION OF EMBODIMENT(S)

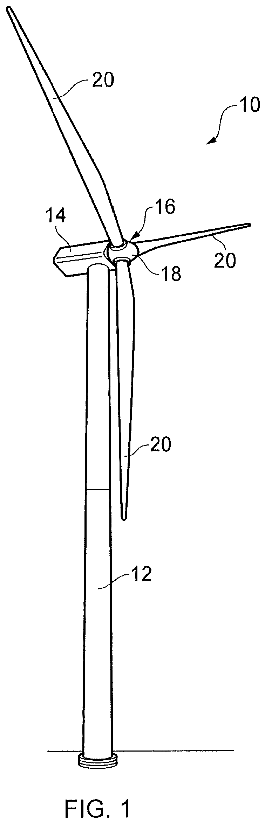

Figure 1 shows a wind turbine 10. The wind turbine 10 has a tower 12 and a nacelle 14 at the top of the tower 12. A wind turbine rotor 16 is connected to the nacelle 14 and arranged to rotate relative to the nacelle 14. The wind turbine rotor 16 comprises a hub 18 and multiple blades 20 extending from the hub 18.

The wind turbine blade 20 may comprise a plurality of different materials. For example, the wind turbine blade may comprise carbon fibre composite parts, glass fibre composite parts, foam core parts, metallic parts, etc. These materials may all be bound together in the blade 20 such that they cannot readily be disassembled. Binding materials in the blade 20 may include a variety of resins, adhesives, coatings, interlayers, etc. Whilst glass fibres, carbon fibres, metals and many polymers are recyclable, the way in which they are incorporated into the blade 20 may make it difficult to mechanically separate these materials so that they can be recycled into new products.

Thermoset polymer binding materials are commonly found in wind turbine blades. For example, epoxy resin is commonly used as the infusate for the shell of many wind turbine blades. Not only can this infusate act as a matrix material for glass fibre layers to form glass fibre composite when cured but it can also acts to bind other components such as metallic foils (used in a lightning strike protection system for the blade) and carbon fibre composites to the glass fibre composite. Internal shear webs within the blade 20 may also comprise glass fibre composite with a thermoset polymer matrix. This may be the same or different thermoset or other epoxy used as the infusate. The carbon fibre composite may comprise a different matrix material and yet further polymers may be used as adhesives for joining the shear web to the shell, or for joining blade shell halves together for example. Each binding material will have been selected to perform a particular function when designing the blade.

However, it has been found that there is potential for some thermoset polymer binding materials to be degraded by chemical reaction so that their binding capacity is diminished. With sufficient degradation of the polymer, e.g. removal of some cross-links and/or breaking up for example by swelling, parts of the blade 20 bound by the thermoset polymer can be separated. It was realized that not all binding material degrade at the same speed under the same conditions, and so whilst it may be possible to degrade a particular polymer or group of polymers by a specific chemical treatment, other parts of the blade will likely remain bound together by other binding materials within the blade.

By embracing these different binding materials, it is proposed to utilize this material discrepancy actively in the processing of wind turbine blades for recycling one or more blade materials, and also to design blades for more optimal material separation at end of life. For example, different material parts of the blade may be covered with a binding material that is resistant to chemical treatment of another binding material of the blade, so that discrete parts of the blade may be separated more easily, and thereby ensure the resulting recycling products are better separated and have higher value. For example, a mix of carbon fibres and glass fibres have a much lower value than a pure glass fibres and pure carbon fibres.

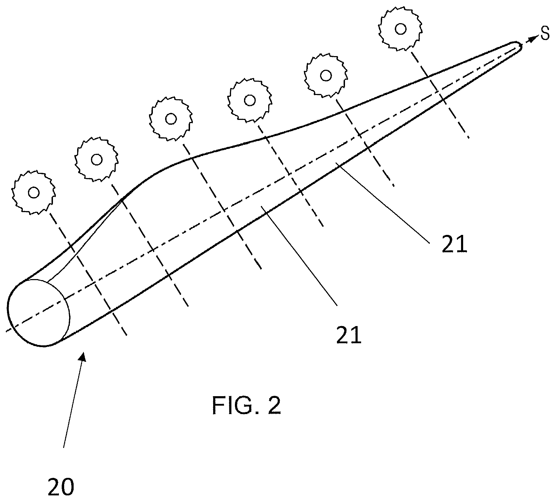

Figure 2 shows a wind turbine blade 20 having a spanwise longitudinal axis S. The blade 20 may be over 100 meters long which may make processing for separating of blade materials for recycling difficult to handle and so the blade may initially be segmented into plurality of blade portions 21. This segmenting may be done mechanically, e.g. by cutting using a saw to create a plurality of generally chordwise cuts in the blade 20 so as to form a plurality of blade portions 21. Each of these blade portions 21 may be cut further along the longitudinal axis or traverse. For example, the interior of the wind turbine blade may comprise a shear web that may contain a subset of the materials used in the overall blade 20 and so removal of discrete components such as the shear web may aid processing for recycling.

Additionally, certain materials such as carbon fibre composite spar caps and metallic foil lighting strike protection layers may exist only in specific locations within the blade 20 and so cutting along or near the boundary of these materials may further aid processing of the blade for recycling.

Once the blade 20 has been cut into the blade portions 21, the blade portions 21 may be processed according to the materials within that blade portion.

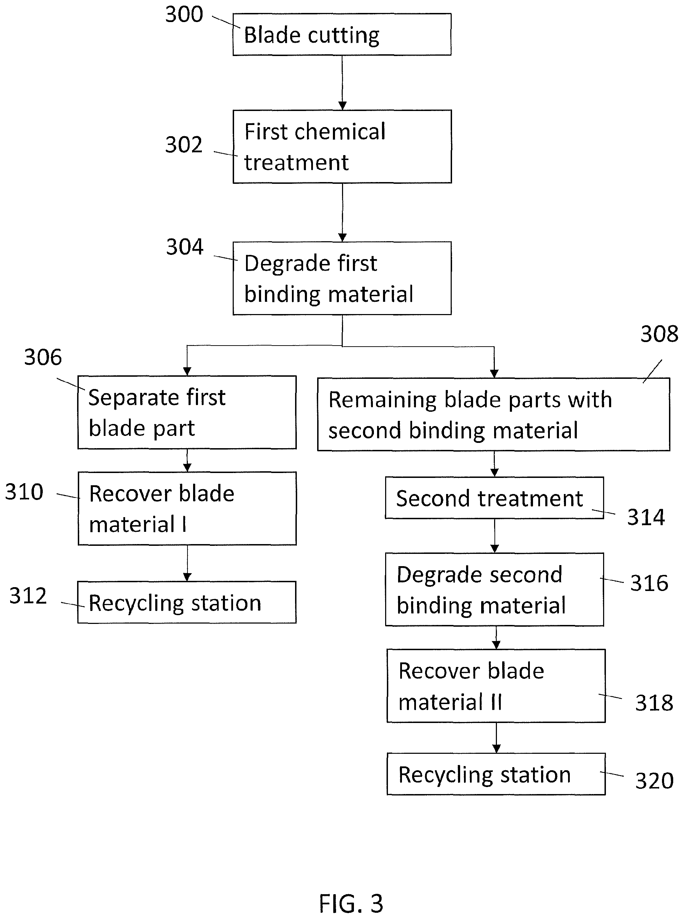

Figure 3 shows a flow diagram of an exemplary method of preparing the wind turbine blade 20 for recycling. After the initial step of mechanically segmenting the blade at step 300, which may comprise blade cutting, to create the wind turbine blade portion 21, the blade portion may be subjected to a first chemical treatment at step 302. The first chemical treatment 302 is selected to degrade a first binding material of the blade at step 304. The first chemical treatment is selected to degrade the first binding material to a significantly greater extent than a second binding material of the blade portion 21. The step 304 of degrading the first binding material enables a first part of the blade to be separated at step 306 from the remaining parts of the blade which comprise a second binding material at step 308. The separating step 306 is enabled when the first chemical treatment at step 302 has sufficiently degraded the first binding material to release the part from the remainder of the wind turbine blade portion 21 and before the first chemical treatment has significantly degraded the second binding material.

Once the first part of the blade that was previously bound by the first binding material has been separated at step 306 from the remaining pats of the blade it may be possible to recover a first blade material from the first blade part at step 310. This recovered first blade material may thereafter proceed to a recycling station to be recycled at step 312.

The remaining parts of the blade with the second binding material separated from the first blade part at step 308 may not be processed further or may undergo a second treatment at step 314. The second treatment may degrade the second binding material at step 316. After degrading the second binding material a second blade material may be recovered at step 318. The second blade material may then proceed to a recycling station to be recycled at step 320.

It is to be understood that the second treatment may be a second chemical treatment or may be a non-chemical treatment. For example, the second chemical treatment may be using different chemistry to the first chemical treatment, or may be using the same chemistry as used in the first chemical treatment but under different reactions conditions, or alternatively occur at a different reaction speed to the first chemical treatment. Examples of non-chemical treatment may include heat treatment or mechanical separation, for example. Heat treatment may be used to melt or deform the second binding material such that the second binding material may be removed. Examples of mechanically separating the second binding material may include unwrapping or cleaving the second binding material from the blade part.

In one example, the blade portion 21 may include a first fibre composite part containing first fibres in a matrix comprising the first binding material, and a second fibre composite part containing the second binding material. The first matrix material may be degraded such that the glass fibres can be removed for recycling, and the carbon fibre composite part may be separated from the glass fibre composite part. At this stage, after the first chemical treatment, the second matrix material of the carbon fibre composite part is substantially not degraded by the first chemical treatment. This is due to the different matrix materials used as the first binding material from the second binding material. This shows how the different matrix materials used for the carbon fibre composite part and the glass fibre composite part may be used advantageously to separate the carbon fibre composite part, and also how in the same process the first binding material is degraded to an extent where the glass fibres can be successfully removed from their matrix which is the first binding material.

The matrix material of the glass fibre composite part may comprise a polymer, such as a cured thermoset material, e.g. an epoxy resin. The chemical composition of the chemistry used in the first chemical treatment at step 302 will depend on the nature of the matrix material to be degraded by the first chemical treatment. For instance, where the first binding material is an epoxy resin, an acid treatment may be used. The acid treatment may comprise acetic acid, for example. The acid may preferably have a pH below 4 most preferably with a pH below 3. These acids may have relatively low environmental impact and may be generally effective at degrading certain thermoset matrix materials, such as epoxy.

By way of example, the matrix material may comprise a Recyclamine^{®} based epoxy system described in https://www,gbg-giH,coiTi/Bortfo!io/ctieniistry/recvciamkie--technotoav/F008?tab=1 (online at 16 October 2022) or as described in La Rosa, Angela & Blanco, Ignazio & Banatao, Diosdado & Pastine, Stefan & BjOrklund, Anna & Cicala, Gianluca. (2018). Innovative Chemical Process for Recycling Thermosets Cured with Recyclamines® by Converting Bio-Epoxy Composites in Reusable Thermoplastic-An LCA Study. Materials. 11. 353. 10.3390/ma11030353 (referred to below as La Rosa et al).

The acid treatment may be at ambient or above ambient temperature. A higher temperature may increase the reaction rate of the chemical treatment. A lower temperature will reduce energy requirements.

Optionally the acid treatment is a solution of acetic acid which is applied as described in La Rosa et al, by placing the wind turbine portion in a dilute (25%) acetic acid recycling bath of 70 degC for 1 h. Once the thermoset matrix is partially or fully degraded or dissolved, the first part of the blade portion and/or the remainder of the blade portion may be physically separated, e.g. by mechanical action. To reclaim the degraded particulate or dissolved epoxy from the liquid of the first chemical treatment, the acidic recycling liquid of the first chemical treatment may for example be treated with sodium hydroxide base (NaOH) under suitable condition to depolymerize the degraded binder material.

The second matrix material may also be an epoxy but may have a different composition such that the second matrix material does not significantly degrade during the first chemical treatment. Alternatively, the second matrix material may be another polymer.

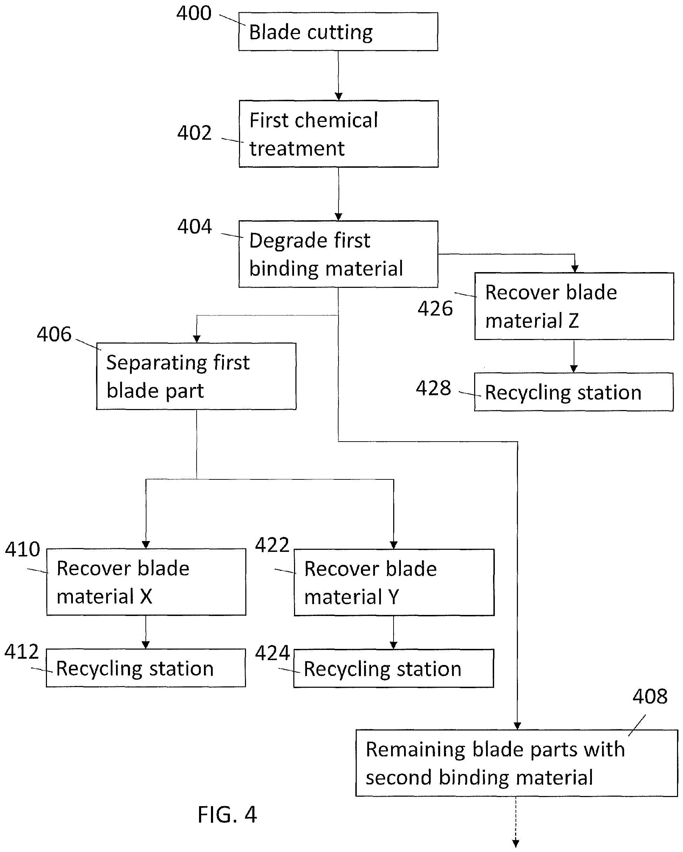

Figure 4 shows another exemplary method of preparing a wind turbine blade for recycling. The method begins with blade segmenting step 400, e.g. cutting, first chemical treatment step 402 and degradation of the first binding material 404 similar to steps 300, 302 and 304, described above. The method of figure 4 however recognises that in degrading the first binding material in step 404 it becomes possible to not only separate the first blade part at step 406 and the remaining blade parts with second binding material at step 408 (similar to steps 306 and 308 described above) but that further materials may be recovered from the blade for recycling or otherwise. For example, in addition to recovering blade material X at step 410 from the separated first blade part from step 406, a further blade material Y may be recovered at step 422.

In one example, the blade material X may be the glass fibres 410 and the blade material Y recovered at step 422 may be a metallic foil. Both these materials X and Y may be recovered from the separated first blade part 406 upon degrading the first binding material at step 404, which may be for example an epoxy resin. Both the blade material X recovered at step 410 and the blade material Y recovered at step 422 may proceed to separated recycling streams at respective recycling stations 412 and 414. The remaining blade parts for the second binding material separated at step 408 may proceed in the same manner as described above in respect of figure 3.

Furthermore, by degrading the first binding material at step 404 it may also be possible to recover the first binding material as a third blade material Z at step 426 following the first chemical treatment 402. For example, in the case where the first binding material is a thermoset polymer and the first chemical treatment is an acid treatment which may remove some of the crosslinks or otherwise degrade the thermoset polymer chain sufficiently so that the first blade part and the remaining blade parts may be separated at steps 406 and 408, the now degraded first binding material may be recovered from the acid treatment at step 426. By a further chemical treatment or otherwise the degraded first binding material recovered as material Z at step 426 may proceed to a further recycling station at step 428 as an uncured or partially cured thermoset resin which may then be used in the manufacture of another product subsequently.

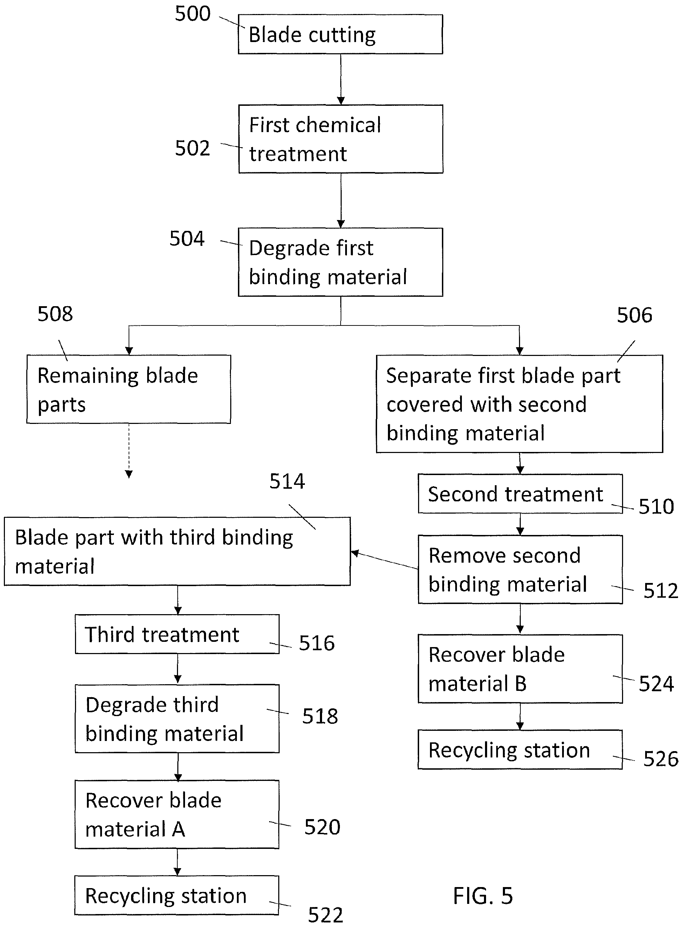

Figure 5 illustrates a further exemplary method of preparing a wind turbine blade for recycling. The method contains similar blade segmenting, cutting, step 500, first chemical treatment step 502 and degrading of the first binding material at step 504 similar to steps 302, 304 and 306 described above. The step of degrading the first binding material 504 differs in the first blade part which is separated at step 506 from the remaining blade parts 508.

The first blade part which is separated at step 506 is covered with a second binding material. By covering the first blade part with the second binding material, which does not degrade significantly by the first chemical treatment 502, creates possibilities for recovering different blade materials which may be bound by similar binding materials that may otherwise inadvertently or undesirably react to the first chemical treatment at step 502. For example, the wind turbine blade portion 21 may comprise both carbon fibre composite material and glass fibre composite material using the same or similar polymer matrix materials. In these circumstances it may be difficult to prevent the first chemical treatment at step 502 from degrading both matrices of different fibre composite materials, which may make it harder to subsequently segregate the two different fibre materials, e.g. the glass fibre and carbon fibre.

To combat this, the first blade part, e.g. the carbon fibre composite part, is covered with second binding material different than the first binding material e.g. the common epoxy matrix. The second binding material used as the covering may be for example a glass material or a thermoplastic polymer which substantially does not degrade under the first chemical treatment used to degrade the composite matrix materials.

Thereafter as show in figure 5, the first blade part separated at 506 may undergo a second treatment at step 510. The second treatment may degrade or remove the second binding material at step 512.

Once the covering second binding material has been removed at step 512 a blade part comprising third binding material may be separated out at step 514. In an example, this blade part with third binding material may be a fibre composite material, e.g. with a matrix material that may be the same or similar to the first binding materials degraded at step 504 by the first chemical treatment 502. Alternatively, the third binding material may be different to either the first or the second binding materials. Once the blade part with the third binding material has been separated at step 514 it may undergo a third treatment at step 516. The third treatment 516 may degrade or remove the third binding material at step 518. The degraded third binding material may be recovered as blade material A at step 520. Blade material A may proceed to a recycling station to be recycled at step 522.

The second binding material removed at step 512 may be recovered as a second blade material B at step 524. The blade material B may be recycled at a recycling station at step 526.

In an example, the wind turbine blade portion 21 comprises a first fibre composite part and a second fibre composite part. The first fibre composite part may contain glass fibres in a matrix comprising the first binding material, and second fibre composite part may comprise carbon fibres. The second binding material may be a cover layer over a matrix material of the second fibre composite part. The matrix material may be the third binding material. In an example, the first fibre composite part is a glass fibre material with a thermoset epoxy resin matrix and the second fibre composite part is a carbon fibre composite part with a thermoset resin matrix and covered with a thermoplastic polymer.

The carbon fibre composite part may comprise a stack of strips of pultruded carbon fibre composite material, each strip having opposing major surfaces. The cover layer of the second binding material may cover either at least the major surfaces of each strip, or a majority of an exterior of the stack of strips.

Using the second binding material as a cover layer may be designed into the process of manufacturing the wind turbine blade to enable improved separation of the blade for recycling at end of life. The cover layer of second binding material may be compatible (e.g. adherable) with both the first binding material and the third binding material, e.g. the thermoset resin matrix materials of the carbon fibre composite part and the glass fibre composite part. The cover layer of second binding material may not serve any useful structural purpose within the blade other than to enable improved separation of blade materials at end of life.

The second binding material may have a relatively high blocking effect to the first chemical treatment compared to a blocking effect of the first binding material to the first chemical treatment.

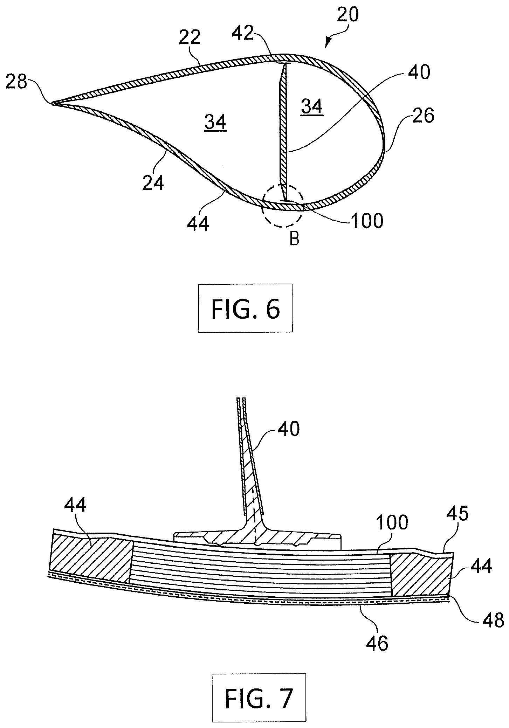

Figures 6 and 7 illustrate a cross section of a wind turbine blade to show the chordwise section of one of the blade portions 21. The wind turbine blade 20 may comprise a first shell half 22, a second shell half 24 connected at a leading edge 26 and a trailing edge 28. The blade portion has a hollow interior 34 and a shear web 40 extends between the first and second shell halves 22, 24. Each shell half 22, 24 may have a sandwich construction comprising fibre composite material 42 and core material 44. The fibre composite material may comprise interior layers of fibre composite material 45 and exterior layers of fibre composite material 46. The core material 44 is sandwiched between the interior and exterior layers of fibre composite material 45, 46. A metallic foil layer 48 may be disposed within the exterior layers of fibre composite material. In the vicinity of the shear web 40 there may be a termination of the core material 44 to make way for a stack of fibre composite layers forming a spar cap 100. The spar cap 100 may be a stack of carbon fibre composite material layers, in particular a stack of pultruded carbon fibre composite material layers.

A process for recycling a wind turbine blade 20 having a construction which may be similar to that shown with respect to figures 6 and 7 will now be described.

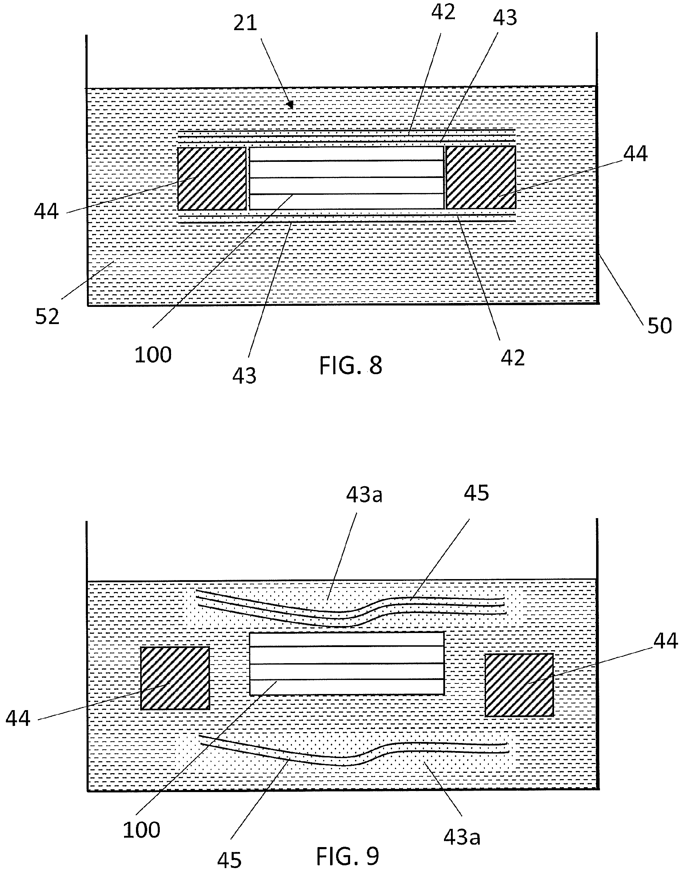

In figure 8, a segmented blade portion 21 comprising first fibre composite material 42, core material 44 and second fibre composite material 100 is placed in a container 50 carrying a first liquid chemical 52. The first chemical 52 may be the chemistry for a first chemical treatment for degrading a first matrix material 43 of the first fibre composite material 44. The wind turbine blade portion 21 may be submerged in the liquid chemical 52 or exposed to the liquid chemicals, for example by spraying.

After a period of time sufficient to allow the liquid chemical 52 to perform a chemical reaction with the first binding material 43 under certain reaction conditions and at a certain reaction speed the first binding material 43 degrades sufficiently for the individual fibres 45 to be released from the now degraded first binding material 43a. the core material 44 and the second fibre composite part 100 also debond from the first fibre composite material 42 due to the degradation of the first binding material 43. Debonded parts following the first chemical treatment are shown in figure 9.

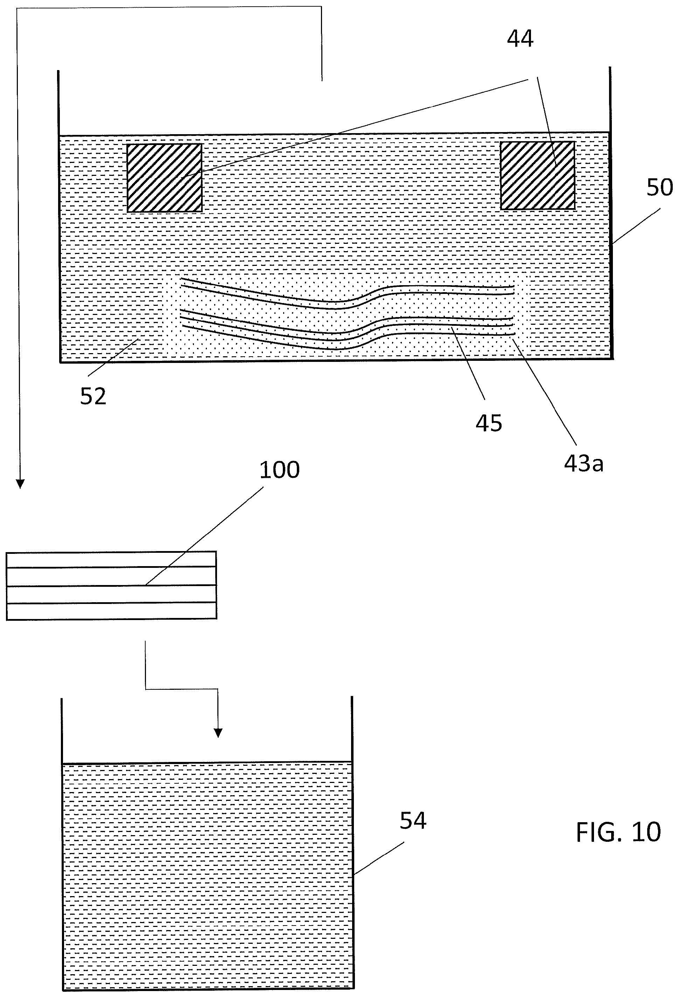

In figure 10 the second fibre composite part 100, substantially unaffected by the first chemical treatment, is separated from the remaining parts of the blade portion 21. The second fibre composite part 100 may be placed in a second container 54.

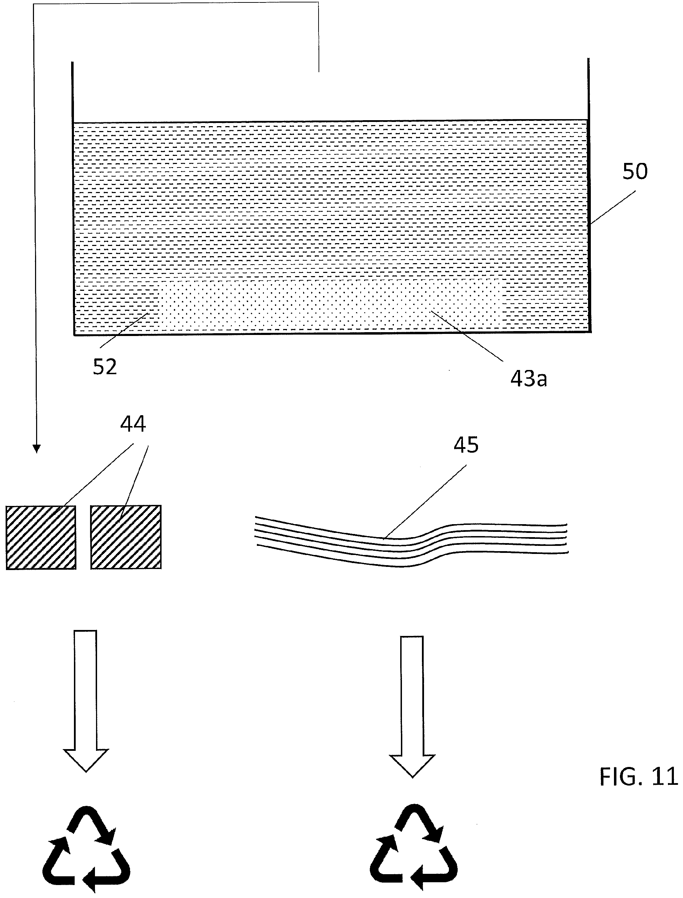

As shown in figure 11, the core material blocks 44 may be removed from the container 50 and recycled in a separate recycling stream. Similarly, the first fibres 45 may be removed from the container and recycled in a separate recycling stream. The degraded first binding material 43a may fully dissolve in the first chemical 52 or may remain as a malleable/fluid or solid particulate material within the container 50.

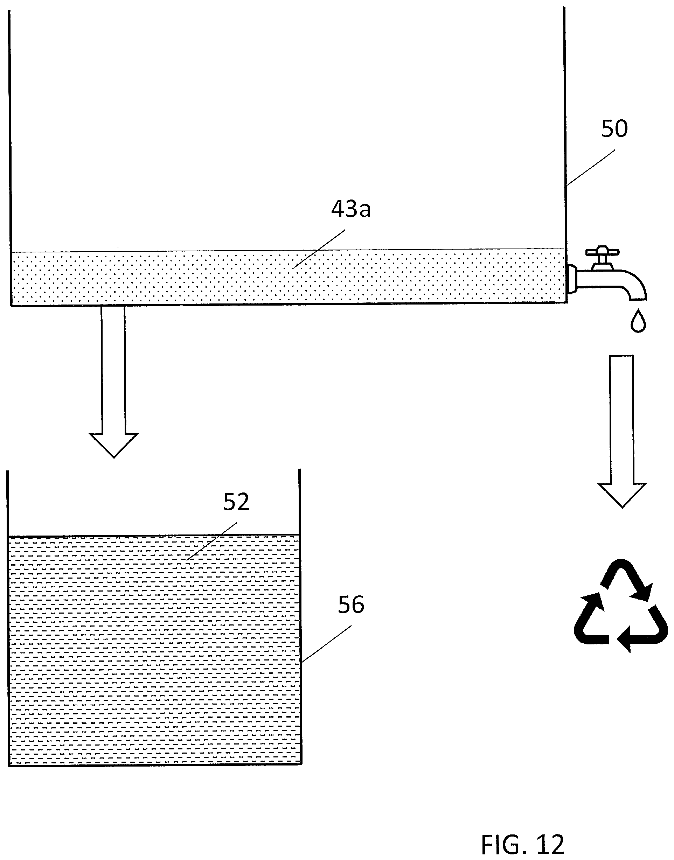

As shown in figure 12, the first chemical 52 may be drained from container 50 to a third container 56 so as to leave the degraded first binding material 43a which may be recovered and possibly recycled in a separate recycling stream.

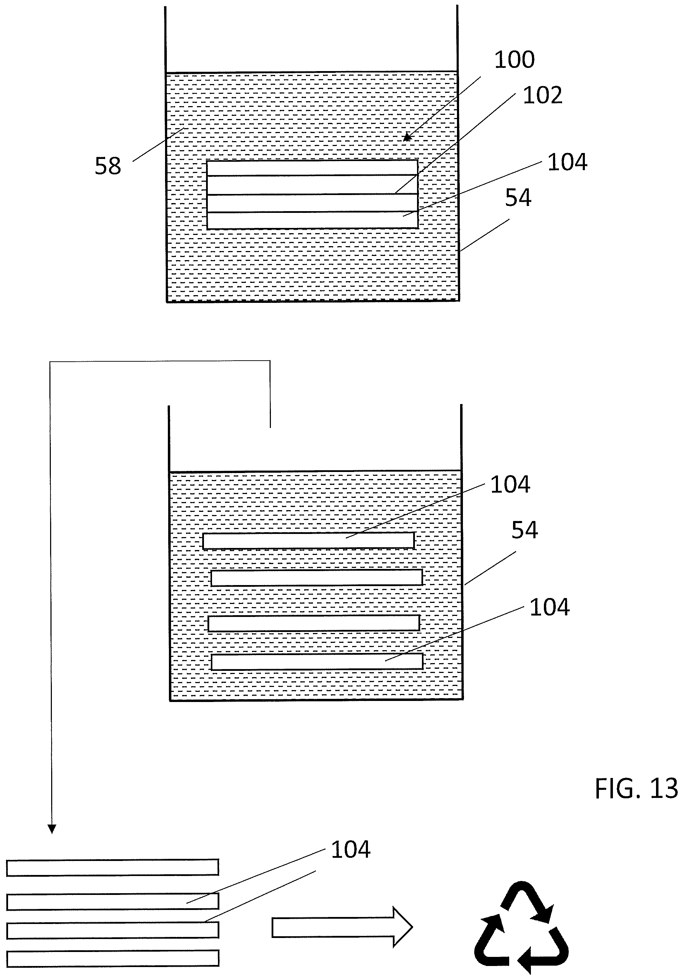

Returning to the second fibre composite part 100, figure 13 illustrates processing of this second fibre composite part 54 in a container 52 containing a second chemical liquid 58. The second chemical liquid 58 may cause a second chemical treatment reaction to occur with a second binding material 102 which may be a second matrix material of the second fibres 104 of the second fibre composite part 100.

The second chemical 58 performs a second chemical reaction in the second container 54 to degrade the second binding material 102 to separate out the individual fibre layers and/or fibres of the second fibre layer 102. Once the second binding material 102 sufficiently degraded, the second fibre material 104 may be removed from the container 54 and recycled in a separate recycling stream.

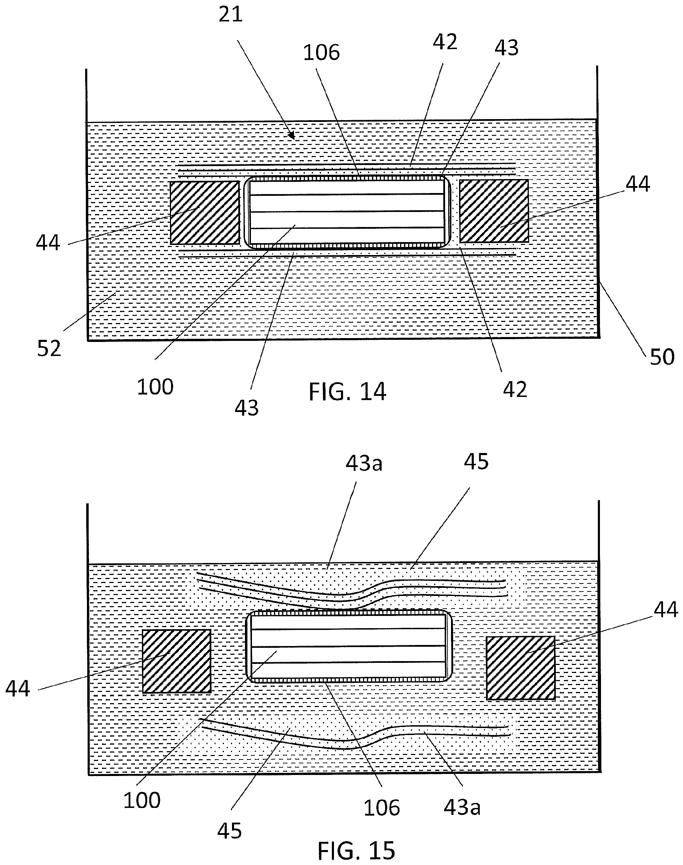

Figures 14 to 16 show a further example in which the blade portion 21 differs in that the second fibre composite part 100 is covered in a layer of third binding material 106. In all other respects the blade portion 21 shown in figure 14 is identical to that described above with reference to figure 8. Figure 15 shows the blade portion 21 of figure 14 after the first chemical treatment, and again is similar to figure 9 with the exception that the cover layer of third binding material 106 remains over the second fibre composite part 100 and is substantially unaffected by the first chemical treatment.

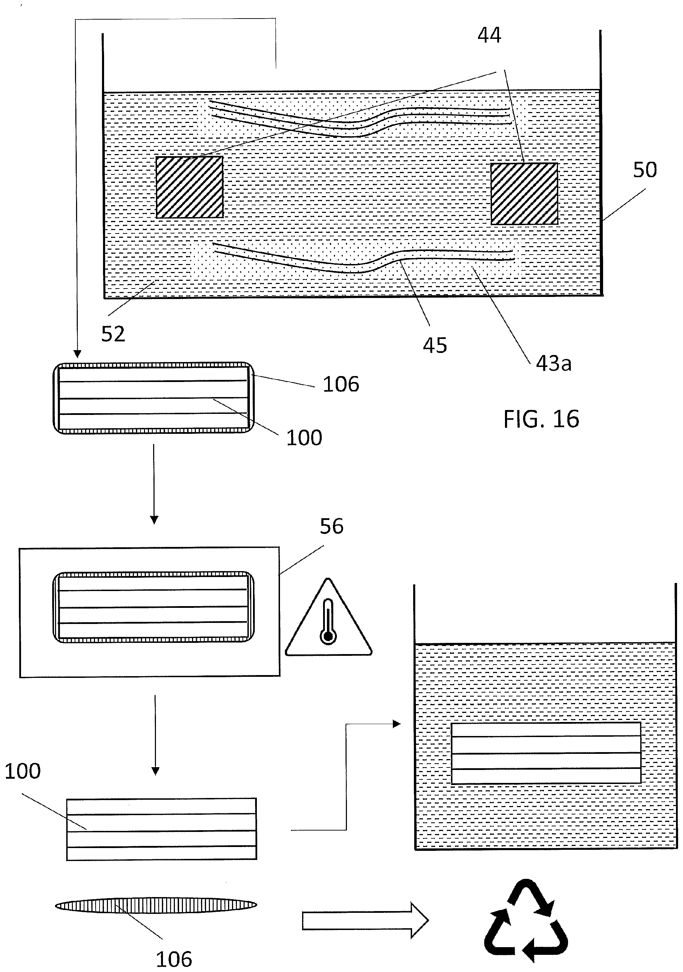

Turning to figure 16, processing of the first fibre composite material and the core blocks is as described previously and not shown again for brevity. The second fibre composite part 100 covered in the third binding material 106 may be removed from container 50 after the first chemical treatment and may be subjected to a second treatment for removal of covering third binding material 106 from the second fibre composite part 100. In an example, the cover layer of third binding material is a thermoplastic material. In this example, the second fibre composite part 100 covered with the third binding material 106 is placed in an oven 56 and subject to a heat treatment causing removal of the cover layer of thermoplastic material 106 which may be recycled in a separate recycling stream. The now uncovered second fibre composite material 100 may then be processed for recycling for example in the same way as described previously with reference to figure 13.

Although the invention has been described above with reference to one or more preferred embodiments, it will be appreciated that various changes or modifications may be made without departing from the scope of the invention as defined in the appended claims.

## Claims

1. A method of preparing a wind turbine blade (20) for recycling, the method comprising:
subjecting at least a portion (21) of the wind turbine blade to a first chemical treatment (302), wherein the first chemical treatment (302, 402, 502) is selected to degrade a first binding material (43) of the wind turbine blade portion (21) to a significantly greater extent than a second binding material (102) of the wind turbine blade portion (21);
separating a part of the wind turbine blade portion from the remainder of the wind turbine blade portion after the first chemical treatment (302, 402, 502) has sufficiently degraded the first binding material (43) to release the part from the remainder of the wind turbine blade portion and before the first chemical treatment has significantly degraded the second binding material (102); and
after the first chemical treatment (302, 402, 502), subjecting the part of the wind turbine blade portion comprising the second binding material therein to a second treatment (314, 510) to degrade or remove (316, 512) the second binding material (102),
wherein the second treatment (314, 510) is a second chemical treatment, wherein the second chemical treatment is either i) using different chemistry to the first chemical treatment or ii) is using the same chemistry as used in the first chemical treatment but under different reaction conditions so degradation of the second binding material (102) occurs at different reaction speed to the first chemical treatment (302, 402, 502).

2. A method according to claim 1 , wherein the first binding material (43) is a polymer, preferably a thermoset, preferably an epoxy.

3. A method according to any preceding claim, wherein the second binding material (102) is a polymer, preferably a thermoplastic or a thermoset polymer.

4. A method according to any preceding claim, wherein the second binding material (102) is thermoplastic polymer, and the second treatment is a heat treatment.

5. A method according to any preceding claim, wherein the part separated (306, 406) after the first chemical treatment (302, 402) is one or more of a glass fibre part, a carbon fibre part, a foam core part or a metallic part.

6. A method according to claim 5, further comprising recovering (310, 410, 422) one or more materials from the separated part to be recycled into another product.

7. A method according to any preceding claim, wherein the wind turbine blade portion (21) comprises a first fibre composite part and a second fibre composite part, wherein the first fibre composite part contains first fibres in a matrix comprising the first binding material, and the second fibre composite part contains second fibres in a matrix comprising the second binding material, preferably wherein the first fibres are glass fibres and the second fibres are carbon fibres.

8. A method according to claim 7, wherein the second binding material is a matrix material of the second fibre composite part.

9. A method according to claim 7, wherein the second binding material is a cover layer over a matrix material of the second fibre composite part, preferably wherein the matrix material of the second fibre composite part is a third binding material, and further preferably wherein the method comprises a third treatment (516) to degrade or remove the third binding material (518) from the second fibre composite part.

10. A method according to claim 9, wherein the second fibre composite part comprises a stack of strips of pultruded carbon fibre composite material, each strip having opposing major surfaces, and wherein the cover layer of the second binding material covers either i) at least the major surfaces of each strip, or ii) a majority of an exterior of the stack of strips.

11. A method according to any preceding claim, wherein the second binding material (102) has relatively high blocking effect to the first chemical treatment (302, 402, 502) compared to a blocking effect of the first binding material (43) to the first chemical treatment (302, 402, 502).

12. A method according to any preceding claim, further comprising mechanically segmenting (300) a wind turbine blade (20) to create the wind turbine blade portion (21).

## Patentansprüche

1. Verfahren zur Herstellung eines Windkraftanlagenblatts (20) für eine Wiederverwertung, wobei das Verfahren Folgendes umfasst:
Unterziehen mindestens eines Abschnitts (21) des Windkraftanlagenblatts einer ersten chemischen Behandlung (302), wobei die erste chemische Behandlung (302, 402, 502) so gewählt wird, dass ein erstes Bindemittel (43) des Windkraftanlagenblattabschnitts (21) in deutlich größerem Maße abgebaut wird als ein zweites Bindemittel (102) des Windkraftanlagenblattabschnitts (21);
Abtrennen eines Teils des Windkraftanlagenblattabschnitts von dem Rest des Windkraftanlagenblattabschnitts, nachdem die erste chemische Behandlung (302, 402, 502) das erste Bindemittel (43) so weit abgebaut hat, dass sich der Teil von dem Rest des Windkraftanlagenblattabschnitts lösen lässt, und bevor die erste chemische Behandlung das zweite Bindemittel (102) signifikant abgebaut hat; und
nach der ersten chemischen Behandlung (302, 402, 502) Unterziehen des Teils des Windkraftanlagenblattabschnitts, der das zweite Bindemittel darin umfasst, einer zweiten Behandlung (314, 510), um das zweite Bindemittel (102) abzubauen oder zu entfernen (316, 512), wobei die zweite Behandlung (314, 510) eine zweite chemische Behandlung ist, wobei die zweite chemische Behandlung entweder i) unter Verwendung einer anderen chemischen Zusammensetzung als bei der ersten chemischen Behandlung oder ii) unter Verwendung der gleichen chemischen Zusammensetzung wie bei der ersten chemischen Behandlung, jedoch unter anderen Reaktionsbedingungen, erfolgt, sodass der Abbau des zweiten Bindemittels (102) mit einer anderen Reaktionsgeschwindigkeit als bei der ersten chemischen Behandlung (302, 402, 502) stattfindet.

2. Verfahren nach Anspruch 1, wobei das erste Bindemittel (43) ein Polymer, vorzugsweise ein Duroplast, vorzugsweise ein Epoxidharz, ist.

3. Verfahren nach einem vorstehenden Anspruch, wobei das zweite Bindemittel (102) ein Polymer, vorzugsweise ein thermoplastisches oder duroplastisches Polymer, ist.

4. Verfahren nach einem vorstehenden Anspruch, wobei das zweite Bindemittel (102) ein thermoplastisches Polymer ist und die zweite Behandlung eine Wärmebehandlung ist.

5. Verfahren nach einem vorstehenden Anspruch, wobei der nach der ersten chemischen Behandlung (302, 402) abgetrennten Teil (306, 406) eines oder mehrere von einem Glasfaserteil, einem Karbonfaserteil, einem Schaumstoffkernteil oder einem metallischen Teil ist.

6. Verfahren nach Anspruch 5, ferner umfassend Rückgewinnung (310, 410, 422) eines oder mehrerer Materialien aus dem abgetrennten Teil zur Wiederverwertung in einem anderen Produkt.

7. Verfahren nach einem vorstehenden Anspruch, wobei der Windkraftanlagenblattabschnitt (21) einen ersten Faserverbundteil und einen zweiten Faserverbundteil umfasst, wobei der erste Faserverbundteil erste Fasern in einer Matrix enthält, die das erste Bindemittel umfasst, und der zweite Faserverbundteil zweite Fasern in einer Matrix enthält, die das zweite Bindemittel umfasst, vorzugsweise wobei die ersten Fasern Glasfasern und die zweiten Fasern Karbonfasern sind.

8. Verfahren nach Anspruch 7, wobei das zweite Bindemittel ein Matrixmaterial des zweiten Faserverbundteils ist.

9. Verfahren nach Anspruch 7, wobei das zweite Bindemittel eine Deckschicht über einem Matrixmaterial des zweiten Faserverbundteils ist, vorzugsweise wobei das Matrixmaterial des zweiten Faserverbundteils ein drittes Bindemittel ist, und ferner vorzugsweise wobei das Verfahren eine dritte Behandlung (516) umfasst, um das dritte Bindemittel (518) aus dem zweiten Faserverbundteil abzubauen oder zu entfernen.

10. Verfahren nach Anspruch 9, wobei das zweite Faserverbundteil einen Stapel von Streifen aus pultrudiertem Karbonfaserverbundwerkstoff umfasst, wobei jeder Streifen gegenüberliegende Hauptflächen aufweist und wobei die Deckschicht aus dem zweiten Bindemittel entweder i) mindestens die Hauptflächen jedes Streifens oder ii) einen Großteil einer Außenseite des Streifenstapels bedeckt.

11. Verfahren nach einem vorstehenden Anspruch, wobei das zweite Bindemittel (102) eine relativ hohe Blockierwirkung gegenüber der ersten chemischen Behandlung (302, 402, 502) im Vergleich zu der Blockierwirkung des ersten Bindemittels (43) gegenüber der ersten chemischen Behandlung (302, 402, 502) aufweist.

12. Verfahren nach einem vorstehenden Anspruch, ferner umfassend mechanisches Segmentieren (300) eines Windkraftanlagenblatts (20) zur Herstellung des Windkraftanlagenblattabschnitts (21).

## Revendications

1. Procédé de préparation d'une pale d'éolienne (20) pour le recyclage, le procédé comprenant :
la soumission d'au moins une partie (21) de la pale d'éolienne à un premier traitement chimique (302), dans lequel le premier traitement chimique (302, 402, 502) est sélectionné pour dégrader un premier matériau de liaison (43) de la partie (21) de la pale d'éolienne dans une mesure nettement supérieure à celle d'un deuxième matériau de liaison (102) de la partie (21) de la pale d'éolienne ;
la séparation d'une partie de la partie de la pale d'éolienne du reste de la partie de la pale d'éolienne après que le premier traitement chimique (302, 402, 502) a suffisamment dégradé le premier matériau de liaison (43) pour libérer la partie du reste de la partie de la pale d'éolienne et avant que le premier traitement chimique n'ait dégradé de manière significative le deuxième matériau de liaison (102) ; et
après le premier traitement chimique (302, 402, 502), la soumission de la partie de la pale d'éolienne comprenant le deuxième matériau de liaison dedans à un second traitement (314, 510) pour dégrader ou éliminer (316, 512) le deuxième matériau de liaison (102), dans lequel le second traitement (314, 510) est un second traitement chimique, dans lequel le second traitement chimique soit i) utilise une composition chimique différente du premier traitement chimique, soit ii) utilise la même composition chimique que celle utilisée dans le premier traitement chimique mais dans des conditions de réaction différentes de sorte que la dégradation du deuxième matériau de liaison (102) se produise à une vitesse de réaction différente de celle du premier traitement chimique (302, 402, 502).

2. Procédé selon la revendication 1, dans lequel le premier matériau de liaison (43) est un polymère, de préférence un thermodurcissable, de préférence un époxy.

3. Procédé selon une quelconque revendication précédente, dans lequel le deuxième matériau de liaison (102) est un polymère, de préférence un polymère thermoplastique ou thermodurcissable.

4. Procédé selon une quelconque revendication précédente, dans lequel le deuxième matériau de liaison (102) est un polymère thermoplastique et le deuxième traitement est un traitement thermique.

5. Procédé selon une quelconque revendication précédente, dans lequel la partie séparée (306, 406) après le premier traitement chimique (302, 402) est une ou plusieurs parmi une partie en fibre de verre, une partie en fibre de carbone, une partie à âme en mousse ou une partie métallique.

6. Procédé selon la revendication 5, comprenant en outre la récupération (310, 410, 422) d'un ou plusieurs matériaux de la partie séparée à recycler dans un autre produit.

7. Procédé selon une quelconque revendication précédente, dans lequel la partie de la pale d'éolienne (21) comprend une première partie composite de fibres et une seconde partie composite de fibres, dans lequel la première partie composite de fibres contient des premières fibres dans une matrice comprenant le premier matériau de liaison, et la seconde partie composite de fibres contient des secondes fibres dans une matrice comprenant le deuxième matériau de liaison, de préférence dans lequel les premières fibres sont des fibres de verre et les secondes fibres sont des fibres de carbone.

8. Procédé selon la revendication 7, dans lequel le deuxième matériau de liaison est un matériau de matrice de la seconde partie composite de fibres.

9. Procédé selon la revendication 7, dans lequel le deuxième matériau de liaison est une couche de couverture sur un matériau de matrice de la seconde partie composite de fibres, de préférence dans lequel le matériau de matrice de la seconde partie composite de fibres est un troisième matériau de liaison, et de préférence en outre dans lequel le procédé comprend un troisième traitement (516) pour dégrader ou éliminer le troisième matériau de liaison (518) de la seconde partie composite de fibres.

10. Procédé selon la revendication 9, dans lequel la seconde partie composite de fibres comprend un empilement de bandes de matériau composite en fibre de carbone pultrudée, chaque bande présentant des surfaces principales opposées, et dans lequel la couche de couverture du deuxième matériau de liaison couvre soit i) au moins les surfaces principales de chaque bande, soit ii) la majorité de l'extérieur de l'empilement de bandes.

11. Procédé selon une quelconque revendication précédente, dans lequel le deuxième matériau de liaison (102) présente un effet de blocage relativement élevé sur le premier traitement chimique (302, 402, 502) par rapport à un effet de blocage du premier matériau de liaison (43) sur le premier traitement chimique (302, 402, 502).

12. Procédé selon une quelconque revendication précédente, comprenant en outre la segmentation mécanique (300) d'une pale d'éolienne (20) pour créer la partie de la pale d'éolienne (21).
